# EUROPEAN PATENT SPECIFICATION

(11) **EP 0 987 216 B1**
(45) Date of publication and mention of the grant of the patent: **16.07.2003**
(21) Application number: 98203108.0
(22) Date of filing: 17.09.1998
(51) Int. Cl.: B68F 3/00, G01B 5/207

(54) **Method of contouring an accessory for a horse or other work or mount animal**
Methode zur Konturierung des Accessoires eines Pferdes oder eines anderen Arbeits- oder Reittieres
Méthode pour déterminer la courbure d'un accessoire pour un cheval ou autre animal de travail ou de monte

(43) Date of publication of application: 22.03.2000
(73) Proprietor: PG-Team Oy, 04300 Tuusula (FI)
(72) Inventor: Grönberg, Pauli, 04300 Tuusula (FI)
(74) Representative: Heinänen, Pekka Antero

(56) References cited:
- EP-A- 0 625 480
- EP-A- 0 664 526
- WO-A-97/17281

## Description

The present invention relates to a method of contouring an accessory such as a saddle, a saddle steel and/or a collar intended to be worn against the body of a horse or other trotter, work or mount animal so as to comply with the contour of said animal, said accessory comprising a body part and a padding part attachable to the inner surface of said accessory. Furthermore, the invention concerns accessories made by virtue of the present method.

In a horse harness, commonly used for hitching the horse in front of, e.g., a carriage or an implement, or alternatively, for guiding a horse, the collar forms an essential component that must be contoured according to the shape of the horse's shoulders. The collar comprises two opposed collar halves which are essentially mirrored by their shape and are connectable to each other. The contouring of the collar to the shape of the horse's shoulders is extremely important, because the actual tractive force is transmitted from the horse via the collar to the pulled object. While the general object is to make the collar as well-fitting as possible, in practice only a visual check is carried out, whereby a mismatch of the collar on the horse may result. An ill-fitting collar may cause muscular pain and other distressing side-effects.

The discussion above about the collar is also applicable to other gear mounted on a horse such as the saddle and the saddle steel. The horse may feel a saddle or saddle steel of an ill-fitting shape uncomfortable or causing pains, which further makes the horse irritated. Today, far too little attention is paid on an accurate and individual fitting of such accessories as the saddle, the saddle steel and the collar, for instance.

Fl Pat. No. 90,649 (& WO-A-94/18115) describes a method of fitting the saddle on the horseback, in which method the required pads are cast or otherwise inserted in conjunction with the fitting of the saddle into space between the saddle frame and the horseback, thus achieving a padding that is compliant with the shape of the horseback and is capable of substantially retaining its shape in use. More specifically, the method comprises the steps of fitting, prior to the casting, pressurizable spacer elements and a mould between the saddle frame and the horseback, next partially pressurizing said spacer elements, tightening the saddle girths, increasing the pressure of the spacer elements so as to elevate the saddle by means of the spacer elements into a correct position and a sufficient tightness of the girths essentially corresponding to the actual weight of the rider, whereafter the mould spaces are filled with an elastically resilient material such as expanded polymer foam, cellular rubber foam or the like. Such a method is particularly applicable to fitting a saddle, but less suited for fitting a collar.

It is an object of the present invention to provide an uncomplicated, easy and reliable method of making an accessory such as a saddle, a saddle steel and/or a collar for a horse or other animal, said method being capable of resulting in an accessory such as a collar or saddle free from the above-described shortcomings. The method according to the invention is characterized in that the body part of the accessory is penetrated with holes, the body part is mounted in place on the horse for instance, the gap remaining between the body part and the animal's skin is measured through said holes using digital gauging means, the measurement data is taken to a computer and, with the help of a computer, an automatic machining means such as a conventional CNC mill is controlled so as to machine the padding part according to the measurement data and, finally, the padding part is fastened to the inner surface of the body part.

A preferred embodiment of the method according to the invention is characterized in that the body part of the accessory, advantageously the body part of a collar, is made from a polymer material, such as rim nylon, or from a carbon fiber composite.

Another preferred embodiment of the method according to the invention is characterized in that the padding part is milled from a cellular plastic block or other suitable resilient material.

A still another preferred embodiment of the method according to the invention is characterized in that the holes on the body part are made as defined by a computer program and that said gap measurement is carried out individually through each hole with the help of a gauge tip of a distance-measuring device in the order defined by a computer program.

It is another object of the invention to achieve an accessory such as a saddle, a saddle steel and/or a collar for a horse or other trotter, work or mount animal, said accessory comprising a body part contoured substantially conforming to with the anatomical shape of said animal and, on the side of said body part facing the skin of the horse for instance, attached thereto a padding part characterized in that said padding part is accurately contoured to comply with the underlying anatomical shape of the horse.

An accessory for a horse or other trotter, work or mount animal made according to the invention offers accurate compliancy with the underlying anatomical shape of the animal, thus making the accessory feel comfortable to wear by the animal and causing no muscular or other aching or painful conditions.

In the following the invention will be examined in greater detail with reference to the appended drawings, in which
Figure 1 shows a collar according to the invention mounted on the shoulders of a horse; and
Figure 2 shows the collar in a top view.

While the drawings and the following description related thereto discusses a horse collar as an exemplifying embodiment, the method according to the invention may equally be applied to a horse saddle or an accessory of any other trotter or mount animal such as a camel, donkey, reindeer or the like, said accessory being intended to rest against the skin of the animal and needing to be fit so as to provide with maximum comfort to the animal.

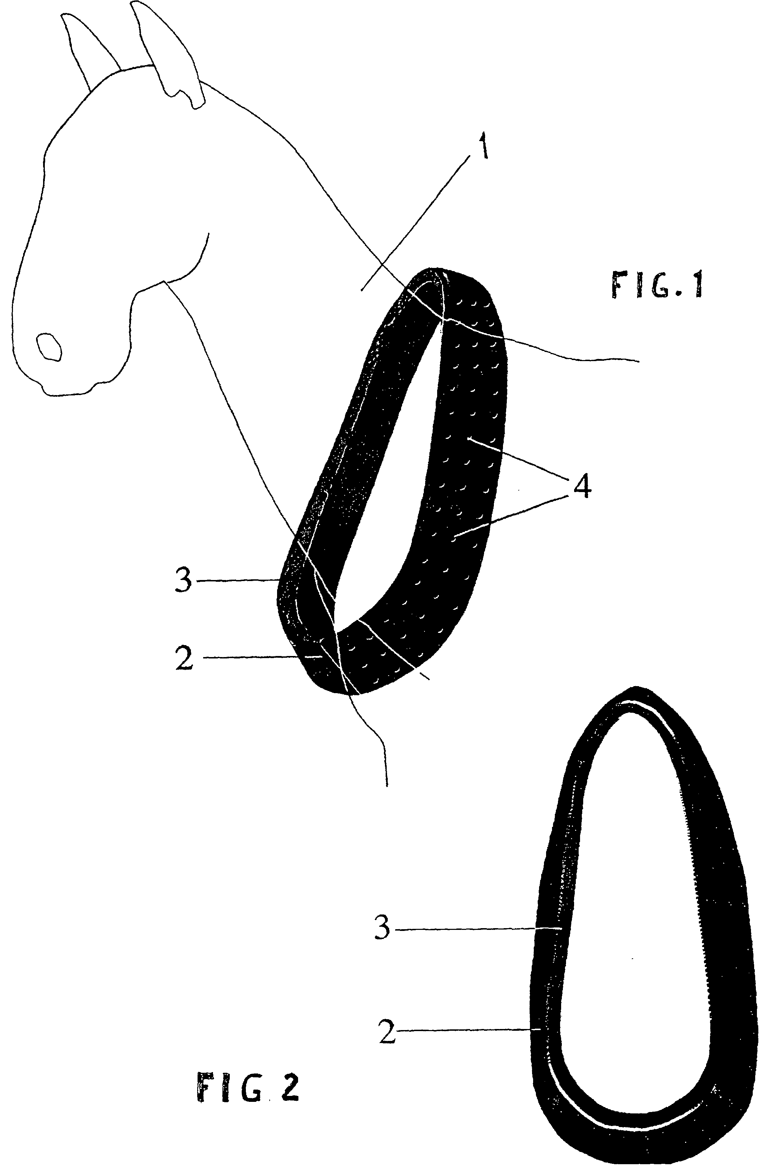

Referring to Fig. 1, therein is denoted with reference numeral 1 a horse having a collar 2, 3 mounted thereon. The collar according to the invention comprises a body part 2 and a padding part 3 fastened to the inner side thereof. The body part may be made from wood or a durable polymer material such as rim nylon or a carbon-fiber composite. The padding part 3 is advantageously made from cellular plastic to avoid penetration of the animal's sweat into the padding part.

According to the invention, the collar is manufactured by first test-fitting a prefabricated body part 2 on the horse 1. The selection of body parts must include blanks of a number of different sizes and shapes, because the individual shoulder-breast shape of horses may vary in a wide range. Simply, a best-fitting blank of the body part 2 is chosen and mounted on the horse. The collar has a given number of small holes 4 made in predetermined positions. The positions of these holes are determined by a computer program as will be explained later. Using a conventional digital gauge (e.g., made by Sony), through each hole is measured the gap remaining between the horse's skin and the inner surface of the body part blank. The sensor of the gauge is connected to a computer, thus permitting on-line transfer of measurement data thereto. Each hole is gauged individually and in a given order determined by a purpose-designed computer program. Thence, an accurate measurement value is stored in the computer for each hole. This information is utilized in the making of the padding part 3. The padding material blank is placed in a computer-controlled machining means such as an automatic CNC mill, to which the earlier measured gauging data is transferred from the computer. On the basis of this information, the milling machine contours a padding part suitable for fastening to the body part, whereby shape of the padding part is made compliant with the anatomical contour of the horse. After the ready-made padding part 3 is fastened to the body part, a collar is ready with an individual shape accurately fit for the horse's body, which makes it anatomically maximally comfortable and functional in use. Depending on the measurement equipment used, it is possible to gauge even a greater number of holes at a time, even all holes at once.

The present method may also be utilized in the manufacture of a saddle and a saddle steel. Herein, the body part of the saddle (not shown) is first mounted on the horseback, next the gap gauging is performed through holes made to the body part and, using the measurement data thus obtained, a padding part suitable for fastening on the inner surface of the saddle is milled in a computer-controlled manner so that the padding part will be contoured maximally conformant to the shape of horseback, thus being extremely comfortable to the horse, because the rider weight will be distributed uniformly over the entire area covered by the saddle.

Thence, the invention can be adapted for use in the manufacture of accessories for any other animal such as reindeer, camel, elephant, donkey, dog, etc. The invention is particularly advantageous in the manufacture of accessories known to impose a distress on the animal.

Omitted from the above description are the details of the computer, digital gauging equipment and the CNC mill, because these devices are conventionally known in the art and their use in an appropriate manner is up to the free choice of a craftsman. The compilation of the computer program can be performed by a person skilled in the art so that the special requirements of the method according to the invention will be fulfilled.

## Claims

1. A method of contouring an accessory such as a saddle, a saddle steel and/or a collar (2, 3) intended to be worn against the body (1) of a horse or other trotter, work or mount animal so as to conform to the body (1) of said animal, said accessory comprising a body part (2) and a padding part (3) attachable to the inner surface of said accessory, **characterized in that** said body part (2) is penetrated with holes (4), the body part is mounted in place on a horse (1) for instance, the gap remaining between the body part (2) and the animal's skin is measured through said holes using digital gauging means, the measurement data is taken to a computer means and, with the help of the computer means, an automatic machining means such as conventional CNC mill is controlled so as to machine the padding part (3) according to the measurement data and, finally, the padding part (3) is fastened to the inner surface of the body part (2).

2. A method as defined in claim 1, **characterized in that** said body part, advantageously the body part (2) of a collar is made from a polymer material such as rim nylon or a carbon-fiber reinforced composite.

3. A method as defined in claim 1 or 2, **characterized in that** the padding part (3) is milled from a cellular plastic block or other suitable resilient material.

4. A method as defined in any of foregoing claims 1-3, **characterized in that** the holes (4) on the body part are made as defined by a computer program and that said gap measurement is carried out individually through each hole (4) with the help of the gauge tip of a distance-measuring device in the order defined by a computer program.

5. An accessory such as a saddle, a saddle steel and/or a collar (2, 3) for a horse or other trotter, work or mount animal, said accessory, obtainable by the method according to claims 1-4, comprising a body part (2) contoured in a manner substantially conforming to the anatomical shape of the animal's body (1) and a padding part (3) attached to the inner surface of said accessory facing the skin of the horse for instance, **characterized in that** said padding part (3) is accurately contoured to conform to the underlying anatomical shape (1) of the horse.

## Patentansprüche

1. Ein Verfahren des Konturierens eines Accessoires, wie zum Beispiel eines Sattels, eines Sattelstahls und/oder eines Kragens (2, 3), der dafür vorgesehen ist, an dem Körper (1) eines Pferdes oder anderen Trabers, Arbeits- oder Reittieres getragen zu werden, derart, dass er sich an den Körper (1) des gesagten Tieres anpasst, das gesagte Accessoire umfasst einen Rumpfteil (2) und einen Polsterteil (3), die an die innere Oberfläche des gesagten Accessoires anschließbar sind, **dadurch gekennzeichnet, dass** in den gesagten Rumpfteil (2) Bohrungen (4) eingebracht sind, der Rumpfteil in einem Platz zum Beispiel auf einem Pferd (1) montiert wird, die Lücke, welche zwischen dem Rumpfteil (2) und der Haut des Tieres verbleibt, durch die gesagten Bohrungen gemessen wird, wobei ein digitales Messmittel verwendet wird, die Messungsdaten in ein Computermittel aufgenommen werden und mit Hilfe des Computermittels ein automatisches Bearbeitungsmittel, wie zum Beispiel eine herkömmliche CNC-Fräse, gesteuert wird, so dass der Polsterteil (3) gemäß der Messungsdaten bearbeitet wird, und schließlich der Polsterteil (3) an der inneren Oberfläche des Rumpfteils (2) befestigt wird.

2. Ein Verfahren wie im Anspruch 1 definiert, **dadurch gekennzeichnet, dass** der gesagte Rumpfteil, vorteilhaft der Rumpfteil (2) eines Kragens, aus einem Polymerwerkstoff, wie zum Beispiel einem Randnylon, oder einer kohlefaserverstärkten Zusammensetzung hergestellt ist.

3. Ein Verfahren wie im Anspruch 1 oder 2 definiert, **dadurch gekennzeichnet, dass** der Polsterteil (3) aus einem Plastschaumstoffblock oder anderem geeigneten elastischen Werkstoff gefräst ist.

4. Ein Verfahren wie in einem der vorhergehenden Ansprüche 1 bis 3 definiert, **dadurch gekennzeichnet, dass** die Bohrungen (4) auf dem Rumpfteil ausgeführt werden, wie sie durch ein Computerprogramm definiert wurden, und das die gesagte Lückenmessung individuell durch jede Bohrung (4) ausgeführt wird, mit Hilfe einer Messspitze einer Distanzmessvorrichtung, in der Reihenfolge, wie sie durch ein Computerprogramm definiert wird.

5. Ein Accessoire, wie zum Beispiel ein Sattel, ein Sattelstahl und/oder ein Kragen (2, 3) für ein Pferd oder anderen Traber, Arbeits- oder Reittier, wobei das gesagte Accessoire durch das Verfahren gemäß der Ansprüche 1 bis 4 erzielbar ist, umfassend einen Rumpfteil (2), welcher in einer Art konturiert ist, die im wesentlichen der anatomischen Form des Tierkörpers (1) angepasst ist, und einen Polsterteil (3), welches an die innere Oberfläche des gesagten Accessoires angeschlossen ist, die der Haut zum Beispiel des Pferdes zugewandt ist, **dadurch gekennzeichnet, dass** der Polsterteil (3) präzise konturiert ist, um der darunter liegenden anatomischen Form (1) des Pferdes angepasst zu sein.

## Revendications

1. Un procédé pour déterminer le contour d'un accessoire tel qu'une selle, un arçon et/ou un collier (2, 3), destiné à être porté sur le corps (1) d'un cheval ou autre animal de trot, de trait ou de monte de manière à se conformer au corps (1) dudit animal, ledit accessoire comprenant une partie de corps (2) et une partie de rembourrage (3) fixable à la surface interieure dudit accessoire,
**caractérisé en ce que** la partie de corps (2) est percée de trous (4), la partie de corps est mise en place sur un cheval (1) par exemple, l'espace restant entre la partie de corps (2) et la peau de l'animal est mesurée à travers lesdits trous en utilisant des moyens numériques de jauge, les données de mesure sont prises par un ordinateur et, à l'aide de l'ordinateur, des moyens automatiques de façonnage tels q'un broyeur classique CNC sont commandés de manière à façonner la partie de rembourrage (3) en fonction des données de mesure et, finalement, la partie de rembourrage (3) est fixée à la surface interieure de la partie de corps (2).

2. Un procédé tel que défini dans la revendication 1,
**caractérisé en ce que** ladite partie de corps, avantageusement la partie de corps (2) d'un collier est constituée d'un matériau polymère tel qu'un nylon de monture ou un composite renforcé par des fibres de carbonée.

3. Un procédé tel que défini dans la revendication 1 ou 2,
**caractérisé en ce que** la partie de rembourrage (3) est broyée à partir d'un bloc de plastique cellulaire ou autre matériau résilient approprié.

4. Un procédé tel que défini dans l'une quelconque des revendications 1 à 3,
**caractérisé en ce que** les trous (4) dans la partie de corps sont réalisés tels que définis par un programme d'ordinateur et **en ce que** ladite mesure de l'espace est mise en oeuvre individuellement à travers chaque trou (4) à l'aide de la pointe de jauge d'un dispositif de mesure de distance dans l'ordre défini par un programme d'ordinateur.

5. Un accessoire tel qu'une selle, un arçon et/ou un collier (2, 3) pour un cheval ou autre animal de trot, de trait ou de monte, ledit accessoire étant obtenu par le procédé selon les revendications 1 à 4, comprenant une partie de corps (2) dont le contour est déterminé de manière à se conformer sensiblement à la forme anatomique du corps (1) de l'animal et une partie de rembourrage (3) attachée à la surface intérieure dudit accessoire en regard de la peau du cheval par exemple,
**caractérisé en ce que** la partie de rembourrage (3) a un contour défini de manière appropriée pour se conformer à la forme anatomique sous-jacente (1) du cheval.
